Europäisches Patentamt

European Patent Office

Office européen des brevets

(11) Veröffentlichungsnummer : **0 063 676**
**B1**

(19)

(12) # EUROPÄISCHE PATENTSCHRIFT

(45) Veröffentlichungstag der Patentschrift :
**20.02.85**

(51) Int. Cl.⁴ : **F 16 J 15/40, F 16 J 15/34**

(21) Anmeldenummer : **82100999.0**

(22) Anmeldetag : **11.02.82**

(54) **Fluidgesperrte Wellendichtung mit reduzierter Gleitgeschwindigkeit.**

(30) Priorität : **28.04.81 DE 3116762**

(43) Veröffentlichungstag der Anmeldung :
**03.11.82 Patentblatt 82/44**

(45) Bekanntmachung des Hinweises auf die Patenterteilung : **20.02.85 Patentblatt 85/08**

(84) Benannte Vertragsstaaten :
**CH DE FR GB IT LI NL**

(56) Entgegenhaltungen :
**FR-A- 1 168 702**
**GB-A- 1 269 285**
**US-A- 2 289 053**

(73) Patentinhaber : **M.A.N. MASCHINENFABRIK AUGS-BURG-NÜRNBERG Aktiengesellschaft**
**Bahnhofstrasse 66**
**D-4200 Oberhausen 11 (DE)**

(72) Erfinder : **Kotzur, Joachim, Dr.-Ing.**
**Holtkampstrasse 18**
**D-4200 Oberhausen 11 (DE)**

## Beschreibung

Die Erfindung betrifft eine fluidgesperrte Wellendichtung mit einem mit der Welle rotierenden, mit Strömungskanälen versehenen Dichtring, einem nachgiebig axial beweglichen und dichtend mit dem Gehäuse verbundenen, feststehenden Abdichtungsring und einem zwischen dem rotierenden Dichtring und dem feststehenden Abdichtungsring angeordneten, mit annähernd halber Wellendrehzahl rotierenden Gleitring.

Wellendichtungen vorgenannter Gattung werden zur Abdichtung zwischen der rotierenden Welle und dem Gehäuse von Fluid-Energiemaschinen für die Verdichtung und Entspannung von Gasen verwendet.

Bei der Wellendichtung nach der GB-A-1 269 285 wird in dem mit der Wellendrehzahl umlaufenden Dichtring in darin angeordneten radialen Kanälen durch Pumpwirkung eine Strömung des Kühlöls erzeugt, die in axiale Richtung umgelenkt, durch axiale Bohrungen im Gleitring geleitet und durch weitere Bohrungen in ruhenden Teilen in der Ölkreislauf zurückgeführt wird. Dabei soll der Gleitring ungefähr mit der halben Drehzahl der Welle umlaufen. Dazu erforderliche Maßnahmen sind nicht offenbart.

Die Drehzahl des frei rotierenden Gleitringes wird durch die an ihm angreifenden Drehmomente bestimmt. Diese sind im wesentlichen durch die an beiden Stirnflächen erzeugten Reibungsmomente bestimmt.

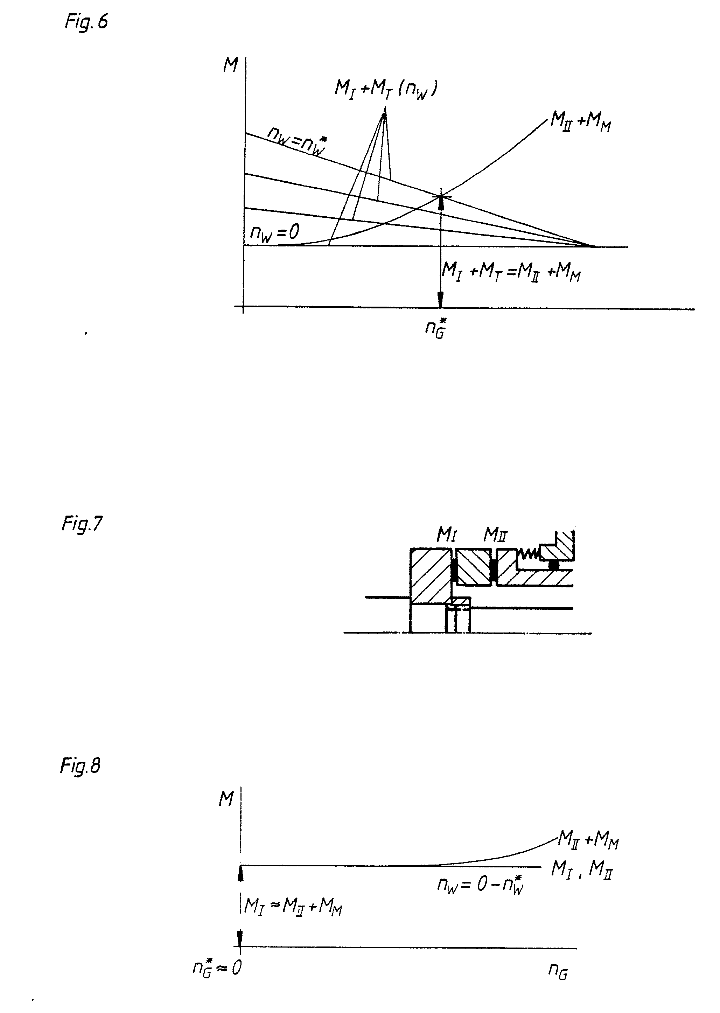

Bei der hier betrachteten Gleitringdichtung ist der Reibungskoeffizient nur wenig von der Drehzahl abhängig, so daß das Antriebsmoment $M_I$, welches vom rotierenden Dichtring auf den Gleitring durch Reibung übertragen wird, im allgemeinen bei allen Drehzahlen $n_G$ des Gleitringes kleiner ist als das bremsende Moment, welches aus dem Reibungsmoment zwischen Gleitring und nicht rotierendem Abdichtungsring $M_{II}$ und dem der Mantelreibung $M_M$ des Gleitringes (außen in Flüssigkeit, innen in Gas) besteht, welches mit zunehmender Drehzahl steigt (Fig. 7 und 8). Durch unterschiedliche Durchmesser und Reibungskoeffizienten der beiden axialen Gleitflächen des Gleitringes sind hier in einem beschränkten Rahmen Variationen der skizzierten Kurvenverläufe möglich, jedoch bleibt die Unsicherheit der Definition einer eindeutigen Betriebsdrehzahl $n_G^*$ des Gleitringes.

Der mit Drall aus dem mit voller Drehzahl rotierenden Dichtring 2 austretende Flüssigkeitsstrom verursacht bei stoßfreier Zuströmung zu den axialen Bohrungen 19 im frei rotierenden Gleitring 12 kein Turbinendrehmoment, da dann die Geschwindigkeitsdreiecke am Eintritt und Austritt dieser Bohrungen gleich sind.

Bei nicht stoßfreier Zuströmung im Relativsystem kann ein Drehmoment aufgebracht werden, wobei jedoch fraglich ist, inwieweit dieses infolge der durch diese Fehlanströmung bedingten Strömungsverluste am Gleitring 12 noch wirksam wird und wodurch die halbe Drehzahl des Gleitringes 12 gegenüber der Welle bewirkt werden soll. Als Turbinenlaufrad ist Gleitring 12 offensichtlich nicht konzipiert.

Wenn der Gleitring nicht oder nur mit geringer, nicht klar definierter Drehzahl rotiert, erzeugt die den Maximalwert annehmende relative Gleitgeschwindigkeit zwischen rotierendem Dichtring und Gleitring örtlich eine erhebliche Reibungswärme. Nachteilig wirken sich hier, insbesondere bei hohen Drehzahlen die zusätzlichen durch die Fehlanströmung bedingten Strömungsverluste bezüglich einer zusätzlichen Temperaturerhöhung aus, die vermieden werden muß. Weitere Strömungsverluste treten dadurch auf, daß durch die gezeigte Strömungsführung nach Austritt aus dem Gleitring eine weitgehende Verwirbelung der aus dem Gleitring austretenden Strömungsgeschwindigkeit bewirkt wird, so daß weitere Verluste durch die erforderliche Umsetzung von statischer Druckenergie in Geschwindigkeit am Eintritt zum Pumpenrad 2 entstehen.

Eine derartige Wellendichtung ist daher für niedrige bis mittlere Gleitgeschwindigkeiten geeignet. Bei hohen Gleitgeschwindigkeiten können Überhitzungen infolge mangelhafter Wärmeabfuhr auftreten, die zu vorzeitigem Verschleiß des Gleitringes führt. Ein die Drehzahl des frei rotierenden Gleitringes eindeutig definierbares Drehmoment unter möglichst geringen Strömungsverlusten ist damit nicht erzielbar.

Der Erfindung liegt daher die Aufgabe zugrunde, im Bereich der Wellendichtung verbesserte Strömungsverhältnisse zu schaffen, die gewährleisten, daß der Gleitring durch ein von der Strömungsenergie erzeugtes Drehmoment angetrieben wird und bei einer eindeutig definierten Drehzahl an den Reibflächen des Gleitringes nur eine minimale Reibungswärme entsteht, die von dem Ölstrom sicher abgeleitet wird.

Die Lösung der Aufgabe besteht darin, daß der mit der Welle rotierenden Dichtring auf der dem Gleitring zugewandten Seite mit einem eine gerichtete Strömung erzeugneden Pumpenlaufrad ausgerüstet ist, welches das Kühl- und Sperrmedium in einen im Gehäuse angeordneten Umlenkkanal leitet, in dem sich ein oder mehrere stationäre Leiträder befinden, und der Gleitring mit einem Turbinenlaufrad versehen ist.

Das zur Schmierung und Abführung der Reibungswärme eingesetzte Kühlmedium, vorzugsweise Öl, wird unter einem gegenüber dem abzudichtenden Medium leicht erhöhten Druck in das Gehäuse eingeführt und füllt den Abdichtungsraum vollständig.

Das Pumpenlaufrad, welches in den mit der Maschinendrehzahl rotierenden Dichtring integriert ist, versetzt das Öl in Bewegung, so daß in dem im Gehäuse angeordneten Umlenkkanal in mindestens einem stationären Leitrad eine gerichtete Strömung entsteht, mit der das dem Gleitring zugeordnete Turbinenlaufrad beaufschlagt wird. Die Strömungsenergie wird im Turbinenlaufrad in ein Drehmoment umgesetzt, das den Gleitring in Rotation versetzt. Der austretende Ölstrom wird auf kurzestem Wege und ohne Verwirbelung seiner kinetischen Energie von dem Pumpenlaufrad wieder angesaugt, so daß ein geschlossener Kreislauf entsteht.

Durch das den Gleitring antreibende Turbinenlaufrad wird neben dem Antriebs-Reibmoment $M_I$ ein zusätzliches Moment $M_T$ erzeugt, welches eine mit zunehmender Drehzahl $n_G$ des gleitringes fallende Tendenz hat (jeweils bei konstanter Wellendrehzahl $n_W$ betrachtet). Das Mantelreibungsmoment $M_M$ hat eine mit der Drehzahl $n_G$ steigende Tendenz.

Es kann so eine Drehzahl $n_G^*$ des Gleitringes festgelegt werden, bei der die auf den Gleitring übertragenen Drehmomente $(M_I + M_T)$ gleich den bremsenden Drehmomenten $(M_{II} + M_M)$ sind (Fig. 6). Durch mögliche Veränderungen der Reibungskoeffizienten verursachten Unterschiede in den Momenten $M_I$ und $M_{II}$ treten dabei umso mehr in den Hintergrund, je höher Turbinendrehmoment und Mantelreibungsmoment sind, welche durch die Auslegung des Turbinen- und Pumpenlaufrades sowie der Mantelreibflächen (Oberfläche, Form) beeinflußt werden können.

Eine eindeutige Lage erhält der mit einem Turbinenlaufrad versehene Gleitring dadurch, daß er radial in einem Gleitlager geführt ist.

Der Vorteil der erfindungsgemäßen Wellendichtung besteht in der Kombination von Pumpenlaufrad, Leitrad und Turbinenlaufrad, deren Abmessungen und zugehörigen Schaufelwinkel derart aufeinander abgestimmt sind, daß sich für den Gleitring die halbe Wellendrehzahl sicher einstellt und sich eine gleiche relative Gleitgeschwindigkeit sowohl zu dem umlaufenden Dichtring als auch zu dem gehäuseseitigen feststehenden Abdichtungsring ergibt.

Der strömungsgerechte Kreislauf des Kühlöls verursacht außer der Reibungsverlusten an den Wänden keinen Leistungsverlust durch Wirbelbildung.

Außerdem bewirkt der durch das Turbinen- und Pumpenlaufrad zwangsläufig geleitete Ölstrom eine intensive Ableitung der an den Dichtflächen entstehenden Reibungswärme, wodurch die Betriebssicherheit und die Lebensdauer der Wellendichtung erheblich verbessert werden.

Ein Ausführungsbeispiel der Erfindung ist in der Zeichnung schematisch dargestellt und nachfolgend näher erläutert. Es zeigen :

Figur 1 einen Längsschnitt durch die fluidgesperrte Wellendichtung,

Figur 2 einen Querschnitt durch das Turbinenleit- und Laufrad,

Figur 3 Geschwindigkeitsdreiecke am Ein- und Austritt des Turbinenlaufrades,

Figur 4 einen Querschnitt durch das Pumpenlaufrad,

Figur 5 Geschwindigkeitsdreiecke am Ein- und Austritt des Pumpenlaufrades,

Figur 6 Drehmomente am Gleitring in Abhängigkeit von seiner Drehzahl,

Figur 7 Längsschnitt durch eine bekannte Wellendichtung,

Figur 8 Drehmomentverlauf zu Fig. 7.

Auf der Welle 1 ist der mit der Maschinendrehzahl $n_W$ rotierende Dichtring 2 angeordnet, in den das Pumpenlaufrad 3 integriert ist. Mit diesem Pumpenlaufrad wird eine Flüssigkeit (hier Öl) in dem im Gehäuse 4 angeordneten Umlenkkanal 5 über das Turbinenleitrad 6 dem Turbinenlaufrad 7 zugeführt, welches in den Gleitring 8 integriert ist, welcher auch die beiden Dichtringe 9, 10 (hier Kohle) enthält, welche den Verfahrensgasraum 11 der betreffenden Fluidenenergiemaschine gegen das Dichtöl in den Räumen 12 und 13 abdichten, und zwar auf der einen Seite gegen den mit der Welle rotierenden Dichtring 2 und auf der anderen Seite gegen den nachgiebig axial beweglichen und dichtend mit dem Gehäuse verbundenen nicht drehenden Abdichtungsring 14. Der Gleitring 8 mit den Dichtringen 9, 10 und seine Umgebung sind so dimensioniert, daß sein Axialschub im zulässigen Rahmen bleibt.

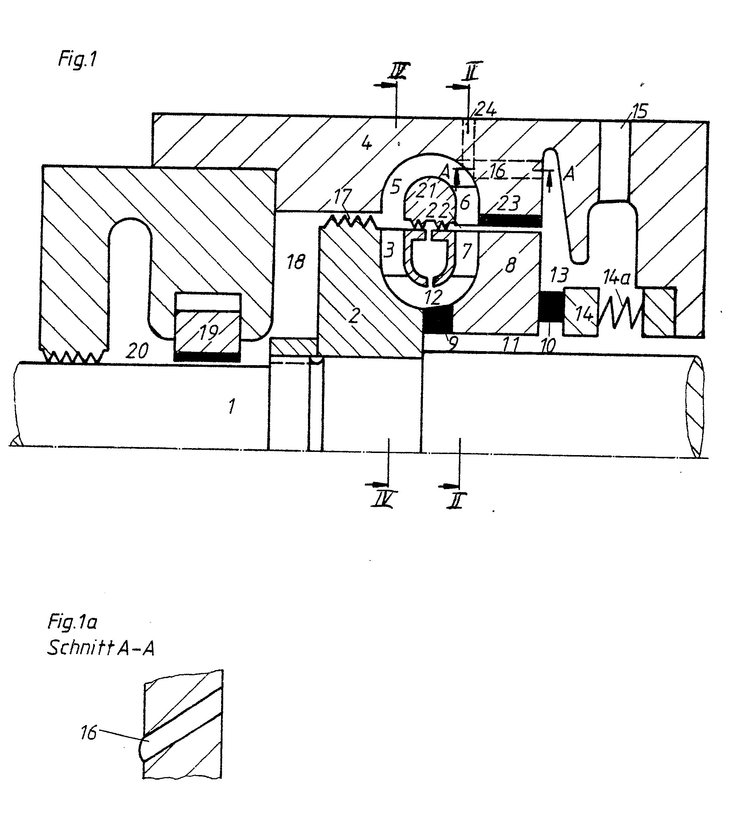

Dichtöl tritt mit geringem Überdruck durch die Bohrung 15 in den Raum 13 ein und strömt von dort durch Bohrungen 16 in den Umlenkkanal 5. Die Bohrungen 16 sind, in Umfangsrichtung betrachtet, so geneigt, daß die strömende Ölmenge ohne große Richtungsänderung in den Umlenkkanal 5 einfließt (Fig. 1 a).

Über einen zusätzlichen externen Anschluß 24 kann erforderlichenfalls zusätzliches Kühlöl zum Austausch in den Pumpen-Turbinen-Kreislauf geleitet werden.

Ein Teil des in Raum 13 strömenden Öles, gelangt direkt über das Gleitlager 23 in den Raum 22.

Fig. 2 zeigt, daß das Turbinenleitrad 6 in den Umlenkkanal 5 integriert ist. Der Ölstrom tritt mit der im Turbinenleitrad 6 erzeugten Absolutgeschwindigkeit $c_{1G}$ in das Turbinenlaufrad ein.

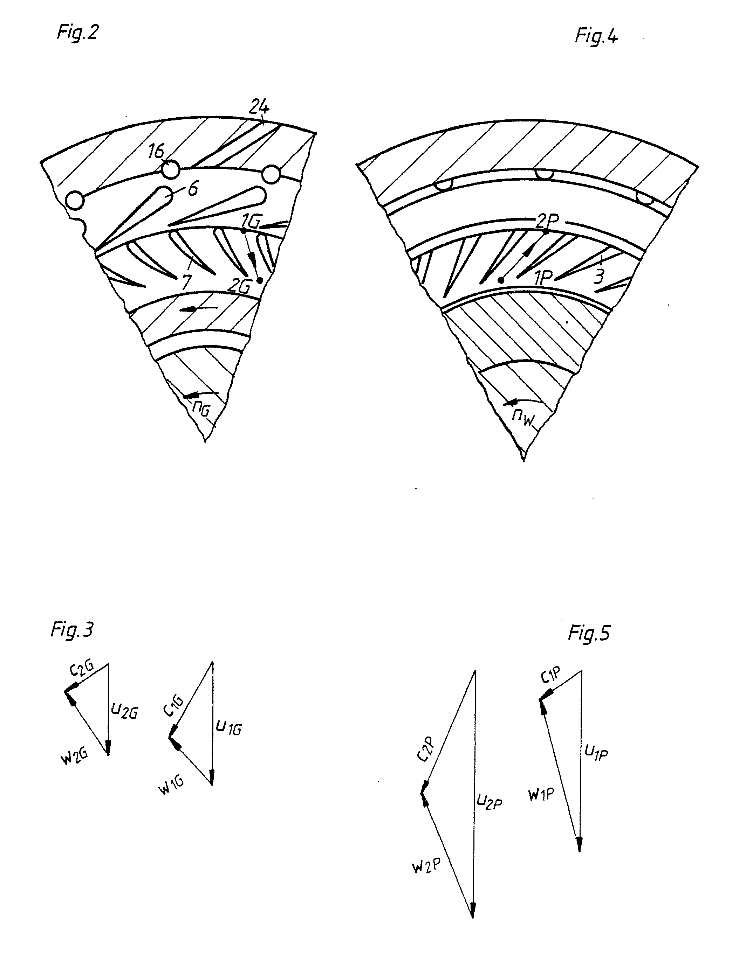

Mit der Umfangsgeschwindigkeit am Außendurchmesser $u_{1G}$, ergibt sich die relative Eintrittsgeschwindigkeit $w_{1G}$, welche den äußeren Schaufelwinkel des Turbinenlaufrades 7 bestimmt. Am Innendurchmesser des Turbinenlaufrades 7 tritt der Ölstrom mit der relativen Geschwindigkeit $w_{2G}$ aus, wobei sich mit der Umfangsgeschwindigkeit $u_{2G}$ die absolute Austrittsgeschwindigkeit $c_{2G}$ ergibt (Fig. 3). Aus der Änderung der Umfangskomponenten der Absolutgeschwindigkeiten $c_{1G}$ und $c_{2G}$ sowie der Umfangsgeschwindigkeiten $u_{1g}$ und $u_{2G}$ resultiert das vom Turbinenlaufrad 7 erzeugte Drehmoment $M_T$.

Dem in Fig. 4 im Querschnitt dargestellten Pumpenlaufrad 3 wird das Öl mit einer absoluten Eintrittsgeschwindigkeit $C_{1P}$ zugeführt, die bei den in Fig. 4 gezeigten Abmessungen nach Größe und Richtung etwa gleich der absoluten Austrittsgeschwindigkeit $c_{2G}$ der Turbine ist.

Der vorzugsweise halben Drehzahl des Gleitringes $n_G$ — des Turbinenlaufrades — gegenüber der Drehzahl der Welle $n_W$ — des Pumpenlaufrades — entspricht bei den in Fig. 4 dargestellten Abmessungen einer Umfangsge-

schwindigkeit $u_{1P}$, welche gegenüber $u_{2G}$ etwa doppelt so groß ist. Mit $c_{1P}$ und $u_{1P}$ ergibt sich die relative Eintrittsgeschwindigkeit $w_{1P}$, welche den inneren Schaufelwinkel des Pumpenlaufrades 3 bestimmt.

Am Austritt verläßt der Ölstrom das Pumpenlaufrad 3 mit der Relativgeschwindigkeit $w_{2P}$, wobei sich mit der Umfangsgeschwindigkeit $u_{2P}$ die absolute Austrittsgeschwindigkeit $c_{2P}$ ergibt (Fig. 5).

Der mit der Absolutgeschwindigkeit $c_{2P}$ das Pumpenlaufrad 3 verlassende Ölstrom wird im Umlenkkanal 5 nach dem Drallsatz verzögert und anschließend zum erneuten Eintritt in das Turbinenleitrad 6 umgelenkt, in welchem der Ölstrom wieder die absolute Eintrittsgeschwindigkeit $c_{1G}$ des Turbinenlaufrades erhält. Aus der Änderung der Umfangskomponenten und der Umfangsgeschwindigkeiten resultiert die vom Pumpenlaufrad auf den Ölstrom übertragene Energie.

Die in bekannter Weise ausgebildete Wellendichtung 21 verhindert, daß Öl direkt aus dem Umlenkkanal 5 in den Raum zwischen Turbinenleitrad und Turbinenlaufrad strömt.

Das Gleitlager 23 ist als Radiallager bekannter Bauart ausgebildet, wodurch der Gleitring 8 seine radiale Führung erhält. Die zugeführte Ölmenge, verringert um das Lecköl durch die Dichtringe 9 und 10 und eventuell im Bypass abgeführtes Öl strömt durch den Ringspalt 17 ab, welcher in bekannter Weise als Dichtspalt ausgebildet und so bemessen ist, daß es ohne große Druckverluste die zur Kühlung aus Raum 13 und gegebenenfalls über den externen Anschluß 24 in den Pumpen-Turbinen-Kreislauf einfließende Ölmenge abführen kann. Zum weiteren Druckabbau ist diesem Dichtring ein Schwimmring 19 bekannter Bauart nachgeschaltet, dem das Dichtöl aus dem Raum 18 zugeführt wird. Über den Schwimmring 19 gelangt das Öl in den mit dem Ölablauf in Verbindung stehenden Raum 20.

Der gehäusefeste Abdichtungsring 14 kann auch anders ausgebildet werden. An Stelle des Faltenbalges 14a kann z. B. eine in einem O-Ring geführte Büchse mit Vorspannung durch Zug- oder Druckfedern vorgesehen sein.

## Ansprüche

1. Fluidgesperrte Wellendichtung mit einem mit der Welle (1) rotierenden, mit Strömungskanälen versehenen Dichtring (2), einem nachgiebig axial beweglichen und dichtend mit dem Gehäuse (4) verbundenen, feststehenden Abdichtungsring (14) und einem zwischen dem rotierenden Dichtring (2) und dem feststehenden Abdichtungsring (14) angeordneten, mit annähernd halber Wellendrehzahl rotierenden Gleitring (8), dadurch gekennzeichnet, daß der mit der Welle (1) rotierenden Dichtring (2) auf der dem Gleitring (8) zugewandten Seite mit einem eine gerichtete Strömung erzeugenden Pumpenlaufrad (3) ausgerüstet ist, welches das Kühl- und Sperrmedium in einen im Gehäuse (4) angeordneten Umlenkkanal (5) leitet, in dem sich ein oder mehrere stationäre Leiträder (6) befinden, und der Gleitring (8) mit einem Turbinenlaufrad (7) versehen ist.

2. Fluidgesperrte Wellendichtung nach Anspruch 1, dadurch gekennzeichnet, daß der Gleitring (8) radial in einem Gleitlager (23) geführt ist.

## Claims

1. Fluid-insulated shaft packing having a gasket (2) provided with flow passages and rotating with the shaft (1), a fixed sealing ring (14) connected in sealing-tight fashion to the housing (4) and resiliently axially movable and a slip ring (8) rotating at approximately half the shaft speed and disposed between the rotating gasket (2) and the fixed sealing ring (14), characterised in that the gasket (2) rotating with the shaft (1) is, on the side facing the slip ring (8), provided with a pump impeller (3) generating a directional flow and guiding the cooling and insulating medium into a by-pass passage (5) disposed in the housing (4) and in which there are one or a plurality of stationary guide wheels (6), and in that the slip ring (8) is provided with a turbine impeller (7).

2. Fluid-insulated shaft packing according to Claim 1, characterised in that the slip ring (8) is radially guided in a plain bearing (23).

## Revendications

1. Garniture étanche d'un arbre, fermée par un fluide, avec une bague d'étanchéité (2) tournant avec l'arbre (1) et munie de canaux d'écoulement, avec un anneau d'étanchement (14) fixe en rotation, mobile axialement de façon élastique, et relié de façon étanche au boîtier (4), ainsi qu'avec un anneau de glissement (8) disposé entre la bague d'étanchéité tournante (2) et l'anneau d'étanchement fixe (14), et tournant à une vitesse de rotation approximativement moitié de celle de l'arbre, garniture caractérisée en ce que la bague d'étanchéité (2) tournant avec l'arbre est équipée, sur son côté faisant face à l'anneau de glissement (8), d'une roue mobile de pompe (3) produisant un écoulement orienté et qui canalise le fluide de refroidissement et de fermeture dans un canal de déviation (5) disposé dans le boîtier (4) et dans lequel se trouve, ou bien se trouvent, une, ou bien, plusieurs roues directrices fixes (6), tandis que l'anneau de glissement (8) est équipé d'une roue mobile de turbine.

2. Garniture étanche d'un arbre, fermée par un fluide, selon la revendication 1, caractérisée en ce que l'anneau de glissement (8) est guidé radialement dans un palier lisse (23).

Fig.1

Fig.1a
Schnitt A−A

Fig.2

Fig.4

Fig.3

Fig.5

*Fig. 6*

$M_I + M_T(n_W)$

$M_{II} + M_M$

$n_W = n_W^*$

$n_W = 0$

$M_I + M_T = M_{II} + M_M$

$n_G^*$

*Fig.7*

$M_I$  $M_{II}$

*Fig.8*

$M_{II} + M_M$

$M_I , M_{II}$

$n_W = 0 - n_W^*$

$|M_I \approx M_{II} + M_M$

$n_G^* \approx 0$

$n_G$